# EUROPEAN PATENT APPLICATION

(11) **EP 4 542 696 A1**
(43) Date of publication of application: **23.04.2025**
(21) Application number: 23204169.9
(22) Date of filing: 17.10.2023
(51) Int. Cl.: H01M 10/04, H01M 10/0585, H01M 10/613, H01M 10/647, H01M 50/103, H01M 50/528, H01M 50/533, H01M 50/54, H01M 50/548, H01M 10/0525, H01M 50/553, H01M 4/66, H01M 50/529

(54) **BATTERY CELL WITH ELECTRODE STACK AND METHOD FOR MANUFACTURING A BATTERY CELL**

(71) Applicant: CUSTOMCELLS Holding GmbH, 25524 Itzehoe (DE)
(72) Inventor: Paulus, Alexander, 25524 Itzehoe (DE); Himstedt, Rasmus, 25524 Itzehoe (DE)
(74) Representative: LKGLOBAL Lorenz & Kopf Patentanwalt Attorney at Law PartG mbB

(57) **Abstract**

A first aspect of this disclosure is related to a battery cell, comprising:
- a housing ;
- a electrode stack arranged in the housing with a plurality of electrodes of two different types, anodes and cathodes , each of which having a tab; and
wherein the tabs of one type are formed such that they comprise a side part that covers an area on at least one side of the electrode stack ;
- at least one contact element that is contacted to the side part of the tabs of the one type of the electrodes.

## Description

### Technical field

This disclosure is related to battery cells with electrode stacks and to methods for manufacturing one or more battery cells with electrode stacks.

### Background

An electrode stack in a battery cell consists of alternating layers of cathode and anode materials separated by an electrolyte. This structure enables the movement of ions during charging and discharging, facilitating the storage and release of electrical energy. Electrode stacks are ubiquitous in portable electronics like smartphones and laptops, where they provide high energy density for extended usage. They are also crucial in electric vehicle (EV) batteries, powering the vehicle's electric motor, and in grid-scale energy storage systems that store renewable energy for grid stabilization and load leveling. Due to the broad range of application, batteries with electrode stacks are subject to different requirements, such as energy capacity, cooling, and size. Improvements are desirable.

### Summary

An object of the present disclosure is improvement of battery cells.

This object is solved by the disclosed embodiments, which are defined in particular by the subject matter of the independent claims. The dependent claims provide information for further embodiments. Various aspects and embodiments of these aspects are also disclosed in the summary and description below, which provide additional features and advantages.

A first aspect of this disclosure is related to a battery cell, comprising:
- a housing ;
- a electrode stack arranged in the housing with a plurality of electrodes of two different types, anodes and cathodes , each of which having a tab; and wherein the tabs of one type are formed such that they comprise a side part that covers an area on at least one side of the electrode stack ;
- at least one contact element that is contacted to the side part of the tabs of the one type of the electrodes.

A battery cell can have one of different forms. In particular, a battery cell can be a cylindrical cell, a prismatic cell, or a pouch cell. A cylindrical cell can have a tubular or cylindrical shape. A prismatic cell can have a flat, rectangular shape. A pouch cell can have a flexible, flat, and pouch-like structure. Additionally or alternatively, a battery cell can have a more complex form that is a consequence from the intended use. For example, a largeformat cell can be used in applications requiring high energy density and capacity, such as electric vehicles, grid energy storage, and industrial equipment. Therefore, battery cells come in various shapes and sizes. Custom battery packs can be configured in various ways to create custom battery packs tailored to specific applications. These packs may consist of multiple individual cells connected in series or parallel and enclosed in a custom housing. In the following disclosure and for the sake of brevity, many of the aspects, embodiments and further examples are described in the context of a prismatic battery cell. A pouch cell can be derived from a prismatic battery cell by providing the electrode stack in flexible housing. A cylindrical cell can be derived from a prismatic cell by rolling the battery stack before inserting it into a cylindrical or tubular housing. The housing can be stiff or flexible.

An electrode stack in a battery cell typically refers to a design where multiple layers of electrode material are stacked on top of each other within the cell. This stacking of electrode layers can increase the overall capacity and energy density of the battery while maintaining a small cell size under a given form factor. In one configuration, multiple layers of anode material are stacked within the cell. Each anode layer contributes to the capacity of the cell. This design is commonly used in lithium-ion batteries, where stacked anode materials (typically graphite or other carbon-based materials) allow for higher energy storage capacity. Similarly, multiple layers of cathode material can be stacked within the cell. Each cathode layer adds to the capacity of the cell. Stacked cathodes are often used in lithium-ion batteries as well. In other configurations, battery cells use alternating layers of anode and cathode materials to create a stacked configuration. This design can increase both capacity and energy density, providing a balance between anode and cathode contributions. In other configurations, such as solid-state batteries, layers of anode, cathode, and electrolyte materials are stacked together.

A side of the electrode stack can be one of the six sides of a prismatic electrode stack. Additionally or alternatively, a side can be one of the four sides of a round cell. Additionally or alternatively, a side can be a side of the two main sides of a pouch cell.

A tab (also "current collector") that exceeds the stacked configuration can be a part of an electrode and/or a part connected to an electrode that exceeds the electrode stack and that is electrically conductive. A tab can be any uncoated of a coated electrode (an electrode might be coated for protection, such as, e.g. for chemical, mechanical, or electrical protection). A tab can be configured to obtain energy from the battery cell, charge the battery cell and/or for diagnostic purposes. For lithium-ion batteries, various current collectors can be used such as Al, Cu, Ni, Ti, and/or stainless steel. Al can be used for a cathode current collector. Cu can be used as an anode current collector. Al and Cu current collectors can further be categorized into foil, meshed, foam and carbon coated type current collectors. All possible kinds of tabs are addressed by this disclosure. A tab can in particular be formed as a part of an electrode. A tab can be an uncoated part of the electrode. In this way a processing of the tab in order to form the tab such that it covers an area of at least one side of the electrode stack can be facilitated.

The tabs should be formed such that a tab of one electrode type (cathode or anode) does not contact an electrode of an opposite electrode type (anode or cathode) or its respective tab. Otherwise a shortcut could occur that could lead to a thermal runway of the battery cell. To support this arrangement, electrodes can be arranged in a staggered way, such that on one side only electrodes of a certain type protrude, and the electrodes of the other type protrude on the other side. In general, tabs can be formed by bending, angling, and/or plating but also by other methods such as, e.g., casting or additive manufacturing.

A separator in a battery can refer to a component positioned between a cathode (positive electrode) and an anode (negative electrode) to prevent them from coming into direct contact and causing a short circuit, while simultaneously allowing the transfer of ions between the electrodes during charge and discharge cycles. In the context of a battery stack, where multiple cells might be layered or arranged in a pack to achieve desired voltage and capacity, separators are positioned between the electrodes of each individual cell. Additionally or alternatively a single separator can be arranged such that it separates a plurality of electrodes from contacting each other.

A contact element provides an electrical connection between the tabs of one type of electrodes of the battery cell, e.g. for tabs of anodes or for tabs of cathodes. A second contact element can also provide an electrical connection between the tabs of the other type of electrodes. A contacting element can lead to the plus and minus pol of the battery. A contacting element can be made from metals or conductive foils, like copper (often used for the anode) or aluminum (often used for the cathode) due to their high electrical conductivity and stability. A contacting element can also made of other electrically conductive materials. A contacting element can comprise one or more electrically conductive material. Additionally a contacting element can comprise non-conductive (i.e. isolating) or weak-conductive materials, e.g. for improving stability or robustness against environmental influences or in order to separate a flow of thermal energy from a flow of electrical energy in the battery cell.

For many embodiments described in this disclosure, for the forming of tabs on a side of an electrode stack, short tabs can be used. These tabs are, e.g., folded, angled, or plated in order to be formed on the side of the electrode stack. The tabs can be formed such that they contact each other on the side of the electrode stack and build a common contact area. With their part on the side of the electrode stack, the tabs of a common electrode type (cathode tabs or anode tabs) are connected to a contact element. The tabs of the other electrode type can be connected to another contact element. The contact element can be configured thermally conductive, electrically conductive, or both. Using short tabs in this way, can reduce a weight of the battery cell, since less material for tabs is necessary. The tab area on the side of the battery cell can provide a large contacting area for cooling/heating and electrical contacting.

An embodiment of the first aspect is related to a battery cell,
wherein the electrode stack is formed for at least one of the following:
- a round cell;
- a pouch cell; or
- a prismatic cell.

Other battery forms, e.g. custom-made battery forms, are also possible.

An embodiment of the first aspect is related to a battery cell,
wherein a plurality of tabs are arranged at the end of each electrode and above each other.

The tabs can be arranged such that they extend the electrode stack and such that they are arranged above each other. In this case, they can be formed such that they are co-planar to their electrode in a non-final state of the battery. In the final battery cell, the tabs of one type of electrodes can be bent, angled, and/or plated such that they cover a side of the electrode stack. The bending, angling, and/or plating of the tabs occurs during the manufacturing process or later, in particular before the battery stack is inserted into a housing. In this way the electrode stack can be equipped with a tab area on the side of the electrode stack.

An embodiment of the first aspect is related to a battery cell,
wherein:
- tabs of a plurality of electrodes of a first type are arranged on one side of the electrode stack; and
- tabs of a plurality of other electrodes of the second type are arranged on another side of the electrode stack.

A first electrode type can be a cathode or an anode. A second electrode type depends on the first type. If the first type is a cathode, then the second type is an anode. If the first type is an anode, then the second type is a cathode.

By arranging different-type electrode tabs at different sides of the electrode stack, the risk of shortcuts can be reduced, and an energy extraction can be facilitated. In case of a prismatic electrode stack (or an electrode stack that is prismatic at least during a non-final state of the battery stack), electrode tabs of anodes can be placed on a first side and electrode tabs of cathodes can be placed on one or more of the sides adjacent to the first side. Additionally or alternatively, the electrode tabs of the cathodes can be arranged on the opposite side of the first side. Of course, this can also be done vice versa such that the electrode tabs of cathodes are placed on the first side and anode tabs are placed on adjacent sides and/or on the opposite side. If electrodes of a common type are arranged on one side and electrodes of the other type are arranged on the other side, the electrodes can be arranged in a staggered manner, such that on one side only electrodes of a first type protrude and on the other side only electrodes of the other type protrude. tabs are formed at the protruding ends of the electrodes on each side. If the tabs are formed to cover the side of the electrode stack, they cannot contact an electrode of the other type as this electrode is staggered inwards.

In another embodiment, tabs of a first type of electrodes (e.g. cathode tabs, or anode tabs) are arranged on a plurality of sides of the electrode stack. Additionally or alternatively, tabs of the second type of electrodes (e.g. anode tabs, cathode tabs) can also be arranged on a plurality of sides of the electrode stack. The arrangement of the tabs can be such that one side of the battery stack only comprises tabs of one type of electrodes or that some or all sides of the electrode stack comprise tabs of both types of electrodes.

An embodiment of the first aspect is related to a battery cell,
wherein:
- tabs of a plurality of electrodes of a first type are arranged on a first part of a side of the electrode stack; and
- tabs of a plurality of electrodes of a second type are arranged on a second part of the side of the electrode stack.

In this case the electrode tabs of both types of electrodes can be arranged on a common side. Then the tabs belonging to the same electrode type can be separated on this side such that they cannot contact each other. This can be done by arranging tabs of a first type in a certain area, e.g. within one half, of the respective side and tabs of the second type in the remaining area, e.g. within the other half, of the side. In between the areas an isolation zone can be arranged that is not covered by any of the tabs and/or comprises an isolation means, such as a plastic coating. The separation of the different types of tabs can also supported by a border or a frame made from an isolating material, and which is arranged in the battery cell or on the electrode stack such that the tabs of anode and cathode cannot connect to each other.

An embodiment of the first aspect is related to a battery cell,
wherein:
- a plurality of tabs of a first type are formed in a first direction, in particular perpendicular to their respective electrode, on the side of the electrode stack; and
- a plurality of tabs of a second type are formed in a second direction, in particular perpendicular to their respective electrode, on the side of the electrode stack.

This embodiment can be implemented with tabs of electrodes of both types arranged on different sides or on the same side. In case tabs of a first electrode type (e.g. cathode tabs or anode tabs) are arranged on one side of the battery stack and tabs of the other electrode type are arranged on the other side of the electrode stack, the folding direction of the tabs can be defined by the upper electrode of the electrode stack. The tab of the upper electrode can be angled downwards. Also all other tabs of this electrode type can be angled downwards if the lower electrode of the battery stack is of a different type, then the upper electrode. Because then the last tab folded downwards is the tab of the second last electrode and the folded tab does not extend over the electrode stack. If the lower electrode is of the same electrode type than the upper electrode type, the tab of the lower electrode might not be folded downwards as it would extend over the battery stack in this case. The tab of the lower electrode of such an electrode stack can then be angled upwards.

In case tabs of a first electrode type (e.g. cathode tabs or anode tabs) are arranged on the same side of the battery stack as tabs of the second electrode type, the folding direction of the different tabs can be determined as follows: The tab that is on the upper electrode of the electrode stack is angled downwards and the tab that is on the lower electrode of the electrode stack is angled upwards (or not folded at all). In this case, no folded tab extends over the electrode stack. Additionally, the remaining tabs that are connected to electrodes that have the same type as the upper electrode can be angled downwards. Additionally or alternatively, the remaining tabs that are connected to electrodes of opposing type can be angled upwards.

In case the combined thickness of an anode layer, a separator, a cathode layer and a second separator is thinner than a folded part of a plurality of tabs, the plurality of tabs do not overlap. In a particular embodiment, tabs are formed such that two tabs are just touching each other on the side of an electrode stack, without overlapping each other. Furthermore, tabs can be formed that they do not touch each other after being bent but remain separated by a small distance. These tabs can then be connected to each other by further plating and/or by an electrically conductive contacting element.

An embodiment of the first aspect is related to a battery cell,
wherein a plurality of tabs of a common type are formed in a same direction on the side of the electrode stack and at least one tab of the common type is formed in a different direction on the side of the electrode stack.

This embodiment was already described partly in the previous embodiment. A goal of the arrangement can be that no tab extends over the battery stack. Or in other words, the tabs should all be arranged on an area covered by the battery stack. In case a lower electrode of an electrode stack is of the same type than an upper electrode then at least the tab of the lower electrode could extend the battery stack if it would be angled downwards. In this case this electrode can instead angled upwards or, alternatively, no angled at all. This can also be the case if the lower electrode of an electrode stack is of a different type than the upper electrode, but the tab of the lowest electrode that has the same type than the upper electrode of the electrode stack is so long that its angled part would extend across the lower electrode of the battery stack and further over the battery stack as a whole. In this case, this tab can be angled upwards or not angled at all. In fact all tabs can be angled in a direction such that they do not extend over the battery stack.

An embodiment of the first aspect is related to a battery cell,
wherein tabs of electrodes of a common type are directly connected to each other.
tabs of a common type can be connected by forming one or more of them such that the area they cover on the side of the electrode stack is so large that two or more tabs contact each other. If one or more tabs are angled or plated in order to cover the side of the electrode stack, then the angled of plated part of one or more tabs can be made large enough such that tabs contact each other. Thereby, they form a common pole (or current collector) of the electrodes that they connect. If alle electrodes of a certain type are connected over the respective tabs, a common pole or current collector can be provided for the whole battery cell.

An embodiment of the first aspect is related to a battery cell,
wherein the contact element is configured as a heat conductor that is part of and/or connected to the housing.

The contact element can be formed to contact one or more tabs over a broad area. In other words, the contact element can be formed such that heat from the battery can be lead away from the battery efficiently. This can be done, e.g., by forming the contact element larger than a fourth, a third, or half of the side of the electrode stack on which the tabs are formed. Additionally or alternatively, the contact element can have essentially the size of the area at the side of the electrode stack that is covered by the tabs of a common electrode type. Thereby, not only all tabs can be contacted by the contact element but also a fast heat flow can be provided over the contact element. Additionally or alternatively, the contact element can be formed such that it covers more than a fourth, a third, or a half of the area covered by the tabs on the side of the electrode stack.

The contact element can either be formed as a heat conductor that is configured to absorb thermal energy and lead it to an attached solid part and/or dissipate it, e.g., over the air. Alternatively, the contact element can be configured as a heat sink which leads the thermal energy to another part of the battery cell. For example, the contact element can be configured to be attached to a housing of the battery cell. The thermal connection of the contact element to another thermal conductor can be done in an electrically isolating manner. For example, the contact element can be thermally attached to a housing of the battery via an isolating thermally conductive paste. Other materials that are thermally conductive and electrically isolating can comprise, e.g. aluminum nitride, beryllium oxide, silicon nitride, polyimide, Teflon, aluminum silicon carbide, boron nitride filled silicones, etc. These materials can be used to attach the contacting element to the housing of the battery cell.

An embodiment of the first aspect is related to a battery cell,
wherein the contact element is configured as an electrical conductor and in particular comprises a metal such as copper and/or nickel.

Metal in particular is a good thermal conductor and a good electrical conductor as well. Therefore, forming the contacting element with metal can provide the two functions on the same time. This can in particular be used if the contact element shall be related to a pole or a current collector of the battery cell. A contact element on for anodes can comprise Cu/Ni. A contact element for cathodes can comprise Al.

An embodiment of the first aspect is related to a battery cell,
wherein the battery cell comprises a housing; and
wherein the contact element is thermally and/or electrically connected to the housing.

Therefore, the contact element can be a part of the battery independent from the housing. Alternatively, the contact element can be a part of the housing, in particular the housing and the contacting element can be the same battery part. In this case the contact element can be electrically isolating and only function as a heat conductor.

An embodiment of the first aspect is related to a battery cell,
wherein the electrode stack comprises cathodes and anodes; and
wherein the battery cell comprises:
   - two contact elements; and wherein one contact element is contacted to cathode tabs of the electrode stack and the other contact element is contacted to anodes of the electrode stack.

Both contact elements can be configured as an electrical and thermal conductor or as an electrical conductor or only as a thermal conductor. In particular, one contact element can be configured as an electrical and thermal conductor and the other contact element is configured as a heat conductor and an electrical isolator. This can facilitate the task to electrically separate the cathode and the anode.

An embodiment of the first aspect is related to a battery cell,
comprising the steps:
- forming an electrode stack with a plurality of electrode types, anodes, and cathodes, each of which with a tab that comprises a part on a side of the electrode stack;
- forming a contact element on the side of the electrode stack, wherein the contact element is connected to tabs of the electrodes of a common type.

Embodiments of the second aspect can comprise steps to manufacture one or more elements/parts of a battery cell according to the first aspect.

An embodiment of the second aspect is related to a method for manufacturing a battery cell,
comprising the step:
- forming the tabs such that they are arranged essentially coplanar to their respective electrodes;
- processing the tabs, in particular by folding, angling, and/or plating, such that they extend above and/or below their respective electrode.

By forming one or more tabs essentially coplanar to their respective electrode, the tab can be formed as part of an electrode, e.g. an uncoated part, that extends the electrode stack. By leaving the tab part of an electrode uncoated, the tab can be formed such that they cover an area at least one side of the electrode stack. This can, e.g., be done by bent the tab downwards or upwards alongside the electrode stack. Additionally or alternatively, one or more tabs can be plated such that they are formed to cover an area on a side of the electrode stack.

Alternatively, tabs can be independent from an electrode and attached to an electrode during a step of the manufacturing method according to the second aspect. For example, angled tabs can be attached to the electrodes, wherein the angles tabs have a part that is attached to the electrode and another part that is formed such that the tab covers an area of a side of the electrode stack. In general, this area can cover one or more adjacent electrodes.

An embodiment of the second aspect is related to a method for manufacturing a battery cell,
comprising the step:
- compressing the electrode stack such that the distance between a plurality of electrodes decreases.

The manufacturing of the electrode stack can be performed layer by layer. Each layer can comprise a cathode and/or an anode and a separator. Additionally, a layer can also comprise a tab for each electrode. Once a plurality of layers has been assembled, the layer stack can be compressed. In particular, all layers of an electrode stack for a battery cell can be assembled and afterwards the whole electrode stack can be compressed. Compressing an electrode stack (or a part of an electrode stack) after the tabs of the electrodes have been formed facilitates the alignment of the tabs on the side of the electrode stack.

### Brief description of the figures

Further advantages and features result from the following embodiments, some of which refer to the figures. The figures do not always show the embodiments to scale. The dimensions of the various features may be enlarged or reduced, in particular for clarity of description. For this purpose the figures are at least partially schematized.
Fig. 1 illustrates electrodes for a battery cell according to an embodiment of the disclosure.
Fig. 2 illustrates manufacturing steps for an electrode stack of a battery cell according to an embodiment of the disclosure.
Fig. 3 illustrates perspectives of a battery cell according to an embodiment of the disclosure.
Fig. 4 illustrates manufacturing steps for an electrode stack of a battery cell according to an embodiment of the disclosure.
Fig. 5 illustrates manufacturing steps for an electrode stack of a battery cell according to an embodiment of the disclosure.

In the following description reference is made to the accompanying figures which form part of the disclosure, and which illustrate specific aspects in which the present disclosure can be understood. Identical reference signs refer to identical or at least functionally or structurally similar features.

In general, a disclosure of a described method also applies to a corresponding device (or apparatus) for carrying out the method or a corresponding system comprising one or more devices and vice versa. For example, if a specific method step is described, a corresponding device may include a feature to perform the described method step, even if that feature is not explicitly described or represented in the figure. On the other hand, if, for example, a specific device is described on the basis of functional units, a corresponding method may include one or more steps to perform the described functionality, even if such steps are not explicitly described or represented in the figures. Similarly, a system can be provided with corresponding device features or with features to perform a particular method step. The features of the various exemplary aspects and embodiments described above or below may be combined unless expressly stated otherwise.

### Detailed description

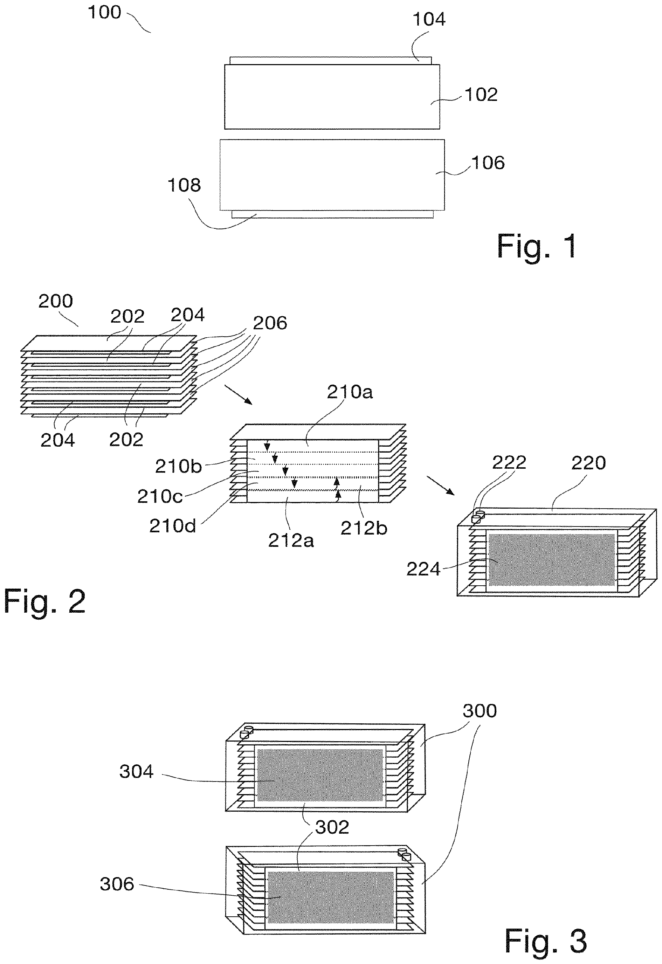

Fig. 1 illustrates electrodes 100 for a battery cell according to an embodiment of the disclosure. The depicted electrodes 100 comprise a 102 and an anode 106. The electrodes are formed rectangular in order to be fitted into a prismatic cell. The cathode 102 comprises on one of its larger sides a tab 104. The cathode tab 104 is made of aluminum. The anode 104 comprises on one of its larger sides a tab 106. The anode tab 104 is made of aluminum copper.

The electrodes 102, 106 can preferably be coated. The tabs 104, 108 are in particular uncoated areas of the electrodes 102, 106 that extend the coated electrodes on one of their two larger sides. The have a rectangular form and are rather small when compared to the electrodes. The two electrodes are formed essentially of the same size in order to be stacked upon each other to form an electrode stack.

Fig. 2 illustrates manufacturing steps for an electrode stack of a battery cell according to an embodiment of the disclosure. In a first step, an electrode stack 200 is formed by placing electrodes, e.g., the electrodes illustrated in Fig. 1, on top of each other. The electrode stack 200 comprises a plurality of anodes 202 and a plurality of cathodes 206. Each of the electrodes comprises tabs. The tabs 204 of the anode can be seen in the perspective illustrated in Fig. 2. The anode tabs extend the electrode stack to the front side. The cathodes 206 are arranged such that their tabs are directed to the back side of the electrode stack 200, which is not visible in the chosen perspective.

In a further step, the tabs of the electrodes are formed such that they cover an area on the front side and on the back side of the electrode stack. The anode tabs 204 are formed to cover the front side. The cathode tabs are formed to cover the back side of the electrode stack 200. The latter is not visible in the chosen perspective. The formation of the tabs is explained for the anode tabs 204. The anode tabs 204 initially formed as uncoated extensions of the coated anodes 202. After being arranged within the electrode stack 200 the four upper anode tabs 210a, 210b, 210c, 210d of the electrode stack 200 are bent downwards. Thereby, they form a first area of anode tabs on the side of the electrode stack 200. Additionally, the two lower anode tabs 212a, 212b are bent upwards. Thereby, they form a second area on the side of the electrode stack 200, which is connected to the first area. In other words, bending the four upper anode tabs 210a - 210d downwards and the two lower anode tabs 212a, 212b upwards creates an area of connected anode tabs on the side of the electrode stack 200.

In a further step, the electrode stack is arranged in a housing 220. The housing 220 comprises a pressure relive valve and an access point for an electrolyte 222. The electrode stack can be compressed in order to fit in the housing. This can be done before or after the forming of the tabs at the side of the electrode stack. The housing also comprises a contact element 224. The contact element has high thermal and electrical conductivity. Therefore, the contact element can lead thermal and electrical energy, which is generated in the electrode stack and further transported via the tabs, to the housing, where the thermal energy can be further dissipated. This can be helpful if the temperature of the electrode stack is above a working temperature. The electrical energy can be further lead to an electrical load. On the other hand, thermal energy from outside the battery cell can enter the battery cell through the housing and further be led by the contract element 224 over the tabs into the electrode stack. This can be in particular helpful if the temperature of the electrode stack is below a working temperature. In the same way the battery can be charged by an electrical current.

In another embodiment, the contact element is only thermally conductive and electrically isolating. This can be done, e.g., by a contact element 224 that is made of ceramics. In order to connect the anode tabs 210a - 210d, 212a, 212b and the cathode tabs (not visible) to their respective poles (not depicted) electrically conductive connections, e.g. an internal wiring (not depicted), can be used. These connections can also be arranged such that they contact the contact element. This can prevent thermal energy from being lead over the electrical connections and not over the contact element 224.

Fig. 3 illustrates two perspectives of a battery cell according to an embodiment of the disclosure. The battery cell 300 has a prismatic housing (similar to the housing 220 of the battery depicted in Fig. 2) that comprises a prismatic electrode stack. The tabs 302 of the battery cell are formed such that they cover a rectangular area on both longer sides of the battery stack. The connected anode tabs and the connected cathode tabs are both connected to a contact element each. The anode tabs are connected to a first contact element 304. The cathode tabs are on the opposite side of the electrode stack and are connected to a second contact element 306. By forming the tabs for the different electrodes and the respective contact elements on different sides of the electrode stacks the size of contact elements can be maximized to approximately the size of the side of the electrode stack. This can facilitate heat conductivity of the contact element and can accelerate a heat flow through the contact element.

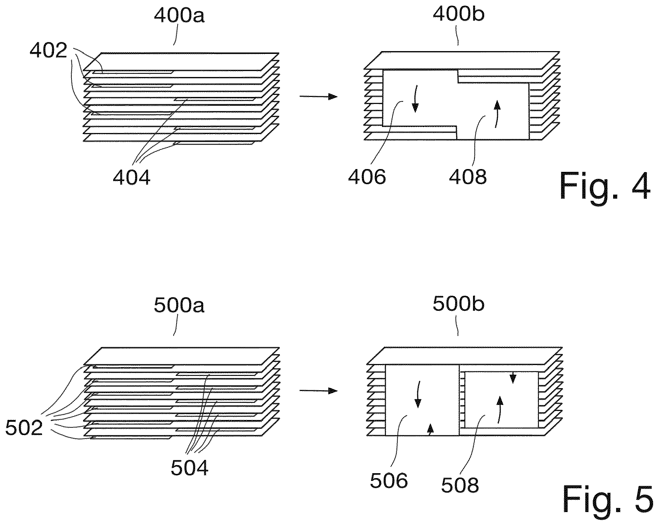

Fig. 4 illustrates manufacturing steps for an electrode stack of a battery cell and an arrangement of tabs of the electrode stack according to an embodiment of the disclosure. A non-final version 400a of the electrode stack is depicted on the left side of the figure. It shows stacked electrodes, with tabs of one electrode type (e.g. anode) being arranged coplanar to the electrodes. Some upper tabs 402 are arranged on the left half of the electrode stack. Some lower tabs 404 are arranged on the right half of the electrode stack. The upper tabs and the lower tabs can be of the same type and flipped such that the same type electrodes can be used for all anodes (or cathodes respectively).

A final version 400b of the electrode stack is depicted on the right side of the figure. It shows the tabs formed such that they cover an area on the side of the electrode stack. The left anode tabs are folded downside 406 and cover the upper and the middle part of the side of the battery stack. The right anode tabs 408 are folded upwards and cover the bottom and the middle part of the side of the battery stack. In this way, it can be assured that the folded anode tabs cover a large part of the side of the electrode stack and that none of the tabs extends the electrode stack. By using tabs are shorter in their length than an entire side of an electrode, tab material can be saved, and a weight of a battery cell can be reduced.

Fig. 5 illustrates manufacturing steps for an electrode stack of a battery cell and an arrangement of tabs of the electrode stack according to an embodiment of the disclosure. A non-final version 500a of the electrode stack is depicted on the left side of the figure. It shows stacked electrodes, with tabs of electrodes of both types (i.e. anodes and cathodes) being arranged coplanar to the electrodes. The tabs of the anodes 502 are formed in the left half of the electrode stack. The tabs of the cathodes 504 are formed in the right half of the electrode stack. The electrode stack comprises an anode on the top side of the electrode stack and on the bottom side of the electrode stack. This is only an example, electrode stacks can in general have an electrode of any type on the top side and an electrode of any type on the bottom side.

A final version 500b of the electrode stack is depicted on the right side of the figure. It shows the tabs formed such that they cover an area on the side of the electrode stack. The anode tabs, which are formed on the left side of the electrode stack, are folded downwards 506 only the lowest anode tab is folded upwards. The folded anode tabs then cover an upper part, a middle part, and a lower part of a side of the battery stack. The cathode tabs 508 are folded upwards and cover a middle part of the side of the battery stack. Between the folded electrode tabs a gap is arranged (which can also be an isolation element) that prevents tabs of different types contacting each other causing a shortcut. In this way, tabs on both electrodes can be formed on the same side of the electrode stack. This can also reduce the weight of a battery cell since less tab material is necessary.

As used herein the term "and/or" includes any and all combinations of one or more of the associated listed items and may be abbreviated as "/".

Although some aspects have been described in the context of an apparatus, it is clear that these aspects also represent a description of the corresponding method, where a block or device corresponds to a method step or a feature of a method step. Analogously, aspects described in the context of a method step also represent a description of a corresponding block or item or feature of a corresponding apparatus.

### List of reference signs

- 100: electrodes
- 102: cathode
- 104: tab for cathode
- 106: tab for anode
- 200: electrode stack
- 202: anodes
- 204: anode tab
- 206: cathodes
- 210a: first upper anode tab
- 210b: second upper anode tab
- 210c: third upper anode tab
- 210d: fourth upper anode tab
- 212a: first lower anode tab
- 212b: second lower anode tab
- 220: housing of battery cell
- 222: pressure relieve valve and electrolyte access
- 224: contact element
- 300: battery cell
- 302: anode and cathode tabs
- 304: contact element for anodes
- 306: contact element for cathodes
- 400a: non-final-electrode-stack
- 400b: final electrode stack
- 402: left anode tabs
- 404: right anode tabs
- 406: downside anode tabs
- 408: upside anode tabs
- 500a: non-final-electrode-stack
- 500b: final electrode stack
- 502: anode tabs
- 504: cathode tabs
- 506: downward anode tabs
- 508: upward cathode tabs

## Claims

1. Battery cell,
comprising:
- a housing (220);
- a electrode stack (200) arranged in the housing (200) with a plurality of electrodes of two different types, anodes (202) and cathodes (206), each of which having a tab; and wherein the tabs of one type (204) are formed such that they comprise a side part (210a - 210d, 212) that covers an area on at least one side of the electrode stack (200);
- at least one contact element (224) that is contacted to the side part of the tabs of the one type of the electrodes.

2. The battery cell of claim 1,
wherein the electrode stack (200) is formed for at least one of the following:
- a round cell;
- a pouch cell; or
- a prismatic cell.

3. The battery cell according to one of the preceding claims,
wherein a plurality of tabs (204) are arranged at the end of each electrode and above each other.

4. The battery cell according to one of the preceding claims,
wherein:
- tabs (210a - 210d, 212) of a plurality of electrodes of a first type are arranged on one side of the electrode stack; and
- tabs of a plurality of other electrodes of the second type are arranged on another side of the electrode stack.

5. The battery cell according to one of the preceding claims,
wherein:
- tabs of a plurality of electrodes of a first type are arranged on a first part (406) of a side of the electrode stack; and
- tabs of a plurality of electrodes of a second type are arranged on a second part (408) of the side of the electrode stack.

6. The battery cell according to the preceding claim,
wherein:
- a plurality of tabs of a first type are formed in a first direction (506), in particular perpendicular to their respective electrode, on the side of the electrode stack ; and
- a plurality of tabs of a second type are formed in a second direction (508), in particular perpendicular to their respective electrode, on the side of the electrode stack.

7. The battery cell according to the preceding claims,
wherein a plurality of tabs of a common type are formed in a same direction (210a - 210d) on the side of the electrode stack and at least one tab of the common type is formed in a different direction (212) on the side of the electrode stack.

8. The battery cell according to one of the preceding claims,
wherein tabs of electrodes of a common type (406, 408, 506, 508) are directly connected to each other.

9. The battery cell according to one of the preceding claims,
wherein the contact element (224) is configured as a heat conductor that is part of and/or connected to the housing.

10. The battery cell according to one of the preceding claims,
wherein the contact element (224) is configured as an electrical conductor and in particular comprises a metal such as copper and/or nickel.

11. The battery cell according to one of the preceding claims,
wherein the battery cell comprises a housing (220); and
wherein the contact element (224) is thermally and/or electrically connected to the housing.

12. The battery cell according to one of the preceding claims,
wherein the electrode stack comprises cathodes and anodes; and
wherein the battery cell comprises:
- two contact elements (224); and
wherein one contact element is contacted to cathode tabs of the electrode stack and the other contact element is contacted to anodes of the electrode stack.

13. A method for producing a battery cell,
comprising the steps:
- forming an electrode stack (200) with a plurality of electrode types, anodes (202) and cathodes (206), each of which with a tab (204) that comprises a part on a side of the electrode stack (210a - 210d, 212);
- forming a contact element (224) on the side of the electrode stack, wherein the contact element is connected to tabs of the electrodes of a common type.

14. The method of the preceding claim,
comprising the step:
- forming the tabs (204) such that they are arranged essentially coplanar to their respective electrodes (202);
- processing the tabs, in particular by folding, angling, and/or plating, such that they extend above and/or below their respective electrode (204).

15. The method of one of claims 13 or 14,
comprising the step:
- compressing the electrode stack (200) such that the distance between a plurality of electrodes decreases.
